# EUROPEAN PATENT APPLICATION

(11) **EP 2 128 862 A1**
(43) Date of publication of application: **02.12.2009**
(21) Application number: 08157260.4
(22) Date of filing: 30.05.2008
(51) Int. Cl.: G11B 7/09, G11B 7/22

(54) **Flat actuator made from one piece of PCB**

(71) Applicant: Deutsche Thomson OHG, 30625 Hannover (DE)
(72) Inventor: Kernbach, Joachim, 78052, Villingen (DE); Mössner, Jürgen, 78086, Brigachtal (DE)
(74) Representative: Thies, Stephan

(57) **Abstract**

An actuator for accessing moving storage media (D) carrying substantially parallel information tracks (T) has a carrier with a base (1) and a suspension wire holder (2), an lens holder (A) with a lens (3), and suspension wires (4) connecting the suspension wire holder (2) and the lens holder (A). The lens holder (A) is movable in at least a tracking direction (X) and a focus direction (Y). According to the invention the suspension wire holder (2) and the lens holder (A) are constituted by a suspension wire holder part (2') and a lens holder part (A') of one machined board made from a printed circuit board material.

## Description

### BACKGROUND OF THE INVENTION

### FIELD OF THE INVENTION

The present invention is related to an actuator, namely for a pickup, for accessing moving storage media according to the preamble of claim 1, a board used for and a method for manufacturing the actuator. A pickup with an actuator is used as a part of a recording and/or reproducing apparatus, e. g. of a DVD player, a DVD recorder or of similar apparatuses.

### DESCRIPTION OF THE PRIOR ART

A pickup with an actuator for accessing moving storage media records and/or reproduces information with respect to the moving storage media carrying substantially parallel information tracks, namely a turning disk, while moving in the radial direction of the disk. In the pickup, typically one or more light beams are generated and focused onto a target or scanning spot on a layer within the disk. Readout light beams coming from the disk are projected onto a photo detector, where they are converted into electrical signals for further evaluation.

A well-known actuator for a pickup has a carrier with a base and a suspension wire holder, a lens holder with a lens, and suspension wires connecting the suspension wire holder and the lens holder. The suspension wires serve a double purpose: mechanically they movably support the lens holder and electrically they apply currents to coils on the lens holder. The coils on the lens holder and a magnet configuration on the carrier, all together referred to as a magnetic driving portion, initiate the movements of the lens holder. The lens holder is movable relatively to the carrier in at least a focus direction substantially orthogonal to the surface of the moving storage medium, and a tracking direction substantially orthogonal to the focus direction and to the information tracks.

A lens drive device for a pickup, referred to as a suspension unit, and a method for manufacturing the same is described in US 2001/0017490 A1. The suspension unit comprises a lens holder, a suspension wire holder of a carrier, referred to as a suspension base, and suspension wires, referred to as wire-form elastic members made of a metal. The lens holder and the suspension base are integrally moulded out of resin on the two end sides of the wire-form elastic members. A method for manufacturing needs a step of positioning the wire-form elastic members with additional facilities before moulding the lens holder and the suspension base. A pickup with an actuator manufactured in this way has a certain height.

### SUMMARY OF THE INVENTION

It is therefore desirable to improve an actuator, namely for a pickup, according to the preamble of claim 1, a board used for and a method for manufacturing the actuator, where the overall size of the actuator, in particular its height, is decreased.

According to the invention this is achieved by the features of claims 1, 4, 5 and 9. Possible advantageous developments of the invention are specified in the dependent claims.

An actuator, namely for a pickup, for accessing moving storage media carrying substantially parallel information tracks has a carrier with a base and a suspension wire holder, a lens holder with a lens, and suspension wires connecting the suspension wire holder and the lens holder. The lens holder is movable in at least a tracking direction and a focus direction. The suspension wires extend in an information direction orthogonal to the tracking direction and the focus direction. According to the invention, the suspension wire holder and the lens holder are constituted by a suspension wire holder part and a lens holder part of one machined board made from a printed circuit board material.

In particular, the suspension wire holder part and the lens holder part are constituted as parts of one common board, namely of a very flat board, which is made from a printed circuit board material. This enables that the actuator according to the invention constitutes a very flat construction, which miniaturises the pickup with the actuator and which is advantageously used for mobile applications.

While being still connected with the common board, the suspension wire holder part and the lens holder part can be provided with their facilities. The assembly of the actuator can be automated, which results in an easy and reproducible assembly. The lens holder part being made of a printed circuit board material enables that it has the function of a lens holder and of electrical contact means for the suspension wires and for coils. The suspension wire holder part being made of a printed circuit board material enables that it has the function of mechanical and electric connection means for the suspension wires. Additional printed circuit boards are not necessary and the number of components of the actuator is decreased.

According to the invention, a board is used for manufacturing an actuator according to the invention. The board is made from a printed circuit board material and machined in a way that the board comprises at least one actuator blank, preferably numerous actuator blanks, extending in a plane spanned by the tracking direction and the information direction. Each actuator blank has a frame, a suspension wire holder part and a lens holder part. The suspension wire holder part and the lens holder part are machined out of two inner longish bars, connected to the frame at their ends. They are arranged with a certain distance to one another in the information direction, and extend parallel to one another in the tracking direction.

Preferably, each frame of the board is provided with notches in line with positions of the suspension wires for guiding the suspension wires to be soldered to the suspension wire holder part and to the lens holder part.

According to the invention, in a method for manufacturing an actuator, namely for a pickup, a board made from a printed circuit board material, which comprises contact areas, is machined with the steps:
a) removing material parts from at least one actuator blank of the board to constitute a frame, a suspension wire holder part and an lens holder part,
b) providing the lens holder part with coils,
c) soldering suspension wires to the suspension wire holder part and to the lens holder part,
d) adding a lens to the lens holder part, and
f) taking off the suspension wire holder part and the lens holder part connected by the suspension wires as a whole from the frame.

Additionally, a base is added.

As an alternative, the base is added to an ensemble of the suspension wire holder and the lens holder taken off from the frame in an additional step g) after step f). Preferably the base is mounted to the suspension wire holder.

As another alternative, the base is added to the suspension wire holder part and the lens holder part, while the suspension wire holder part and the lens holder part are still connected with the frame in an additional step e) before step f), namely after step d). Preferably, the base is mounted to the suspension wire holder part.

Preferably, in step b) at least two tracking coils and/or at least one focus coils are provided. Preferably, in step c) the suspension wires are fixed in their positions by notches in the frame. Preferably, each frame is provided with the notches in step a).

As an alternative of the invention, the material of the board is a core material of a printed circuit board without metal layers. The use of this material for the board decreases the material costs.

As another alternative of the invention, the material of the board is a material of a printed circuit board with at least one metal layer inside. One or more metal layers stabilise the actuator, namely the suspension wire holder and the lens holder.

According to the invention, the board comprises contact areas. As one option, the board is equipped with predefined and processed contact areas before step a). As another option, the material of the board additionally comprises two metal layers covering the top side and the bottom side, which constitute the contact areas. In step a) the contact areas are restricted to soldering pads on the suspension wire holder part and on the lens holder part by removing the metal around the soldering pads.

As a further alternative of the invention, the material of the board is a material of a printed circuit board with at least one layer constituting one printed focus coil or one fine pattern focus coil on the lens holder part. Preferably, the board is also equipped with predefined and processed contact areas before step a).

The carrier, being an ensemble of rigidly connected elements, does not preclude that typically the actuator as a whole, including a carrier, suspension wires and a lens holder, is movable and is being moved, so that all storage locations on the medium can be accessed, in a direction orthogonal to information tracks on the storage medium. In this way, accessing shall be understood to encompass reading access for reading information from the storage medium, or writing access for writing or recording information onto the storage medium, or combinations of reading and writing access.

One possible form of moving storage media is disks carrying concentric circular or spiral information tracks, with the access being of a reflective type where an access light beam is generated and focused onto the information track and a reflected light beam, coming back from and being modulated by the information track is being focused onto a photo detector arrangement and being evaluated. However, it is also within the scope of this invention to be used together with other forms of optical recording medium having information tracks in layers, such as those in card or tape form; and regardless whether the access principle is of a reflective or transductive type.

### BRIEF DESCRIPTION OF THE DRAWINGS

The invention will be explained in more detail using two embodiments, illustrated in figures 1 to 8.

In the figures:
- Figure 1: shows a simplified perspective view of an actuator blank of the first embodiment of the invention;
- Figure 2: shows a simplified perspective view of the actuator blank of the figure 1 provided with suspension wires et al.;
- Figure 3: shows a simplified perspective view of an ensemble of the first embodiment of the invention;
- Figure 4: shows another simplified perspective view of the ensemble of the figure 3;
- Figure 5: shows a simplified perspective view of the ensemble of the figure 3 provided with a base, i.e. of an actuator;
- Figure 6: shows another simplified perspective view of the actuator of the figure 5;
- Figure 7: shows a simplified perspective view of an ensemble of the second embodiment of the invention;
- Figure 8: shows another simplified perspective view of the ensemble of the figure 7.

### DETAILED DESCRIPTION OF THE INVENTION

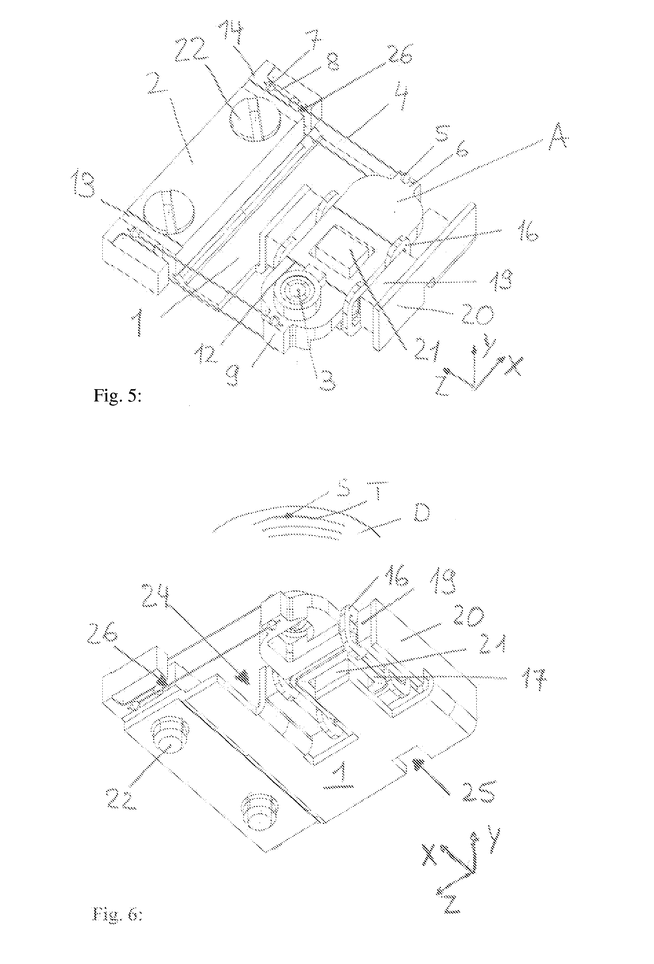

An actuator, for accessing moving storage media, namely a disk D, of the first embodiment of the invention is shown in the **figures 5 and 6****.** The actuator has a carrier with a base 1 and a suspension wire holder part 2, a lens holder A with a lens 3, and suspension wires 4 connecting the suspension wire holder 2 and the lens holder A. The actuator has four suspension wires 4 extending from the suspension wire holder 2 to the lens holder A, i.e. from the rear to the front of the actuator.

By means of the suspension with the suspension wires 4, the lens holder A with the lens 3 is able to perform focus motion in a focus direction Y orthogonal to the surface of the disk D carrying substantially circular information tracks T, shown in the figure 6 at very enlarged, disproportionate distance. Additionally, the lens holder A is able to perform tracking motion in a tracking direction X parallel to the surface of the disk D and orthogonal to the information tracks T.

According to the invention, the suspension wire holder 2 and the lens holder A are constituted by a suspension wire holder part 2' and a lens holder part A', namely by parts of one machined board, which is used for manufacturing the actuator. The board is made from a printed circuit board material. In particular, the material of the board is a core material of a printed circuit board without metal layers.

The suspension wire holder 2 and the lens holder A have a shape of longish bars, which extend parallel to one another in the tracking direction X, and which are arranged with a certain distance to one another in the information direction Z.

The four suspension wires 4, which are made from a metal, extend in the information direction Z from the suspension wire holder 2 to the lens holder A and connect the suspension wire holder 2 and the lens holder A. The suspension wires 4 are arranged substantially parallel. They are oriented in the information direction Z and arranged symmetrically with respect to the suspension wire holder 2 and the lens holder A. Two suspension wires 4 end at each of two opposite sides of the lens holder A in the tracking direction X. The two suspension wires 4 are arranged on top of each other in the focus direction Y, at each side the lens holder A. In particular, one of these two suspension wires 4 ends on the top side of the lens holder A and the other suspension wire 4 ends on the bottom side of the lens holder A. The suspension wires 4 are soldered with their one ends to the lens holder A by soldering points 5 on soldering pads 6. The connections of the suspension wires 4 to the suspension wire holder 2 are similar to the connections to the lens holder A, where the suspension wires 4 are soldered with their other ends to the suspension wire holder 2 by soldering points 7 on soldering pads 8. The soldering pads 6 and 8 are made from a metal.

The lens holder A is rounded at its edges with projections 9 in the vicinity of the soldering points 5, at opposite sides in the tracking direction X. The lens holder A is provided with a central opening 10 and a lens opening 11, at one side in tracking direction X, near the central opening 10. The lens holder A and the suspension wire holder 2 are provided with first grooves 12 and second grooves 13 extending in information direction Z. The first grooves 12 are arranged near the central opening 10 of the lens holder A at opposite side in the tracking direction X. The second grooves 13 are arranged in a region of the ends of the suspension wire holder 2 in tracking direction X, inside of positions of the suspension wires 4. The suspension wire holder 2 is provided with projections 14 extending from the top side and from the bottom side of the suspension wire holder 2 in the focus direction Y, at the positions of the suspension wires 4.

The lens 3 is added to the lens holder A. The lens 3 is arranged in the lens opening 11 at the top side of the lens holder A. The lens opening 11 is broadened, at the bottom side of the lens holder A. The lens holder part A is provided with a balance opening 15 corresponding to the bottom section of the lens opening 11, which is located at the bottom side of the lens holder part A, at the other side in tracking direction X, near the central opening 10, in order to compensate any imbalance due to the asymmetrical arrangement of the lens 3.

The lens holder A is provided with four tracking coils 16 extending in a plane spanned by the tracking direction X and the focus direction Y. Two tracking coils 16 are attached at a front side of the lens holder A and two tracking coils 16 at its rear side, in the information direction Z.

The lens holder A is provided with a focus coil 17 extending in a plane spanned by the tracking direction X and the information direction Z. The lens holder A has a coil opening 18 around the central opening 10 at the bottom side of the lens holder A, in order to constitute a room for the focus coil 17. The focus coil 17 is arranged in the coil opening 18 around the central opening 10.

The base 1, which is made from a metal, extends substantially in a plane spanned by the tracking direction X and the information direction Z, i.e. in a plane orthogonal to the focus direction Y and parallel to the surface of the disk D. The base 1 carries a magnet configuration of the actuator with two multipolar magnets 19, two outer yokes 20 and an inner yoke 21. The outer yokes 20, each carrying one of the multipolar magnets 19, extend vertically from the base 1, namely in the focus direction Y, and are arranged in a way that each of the multipolar magnets 19 faces a pair of tracking coils 16, at one of two opposite sides of the lens holder A in the information direction Z. The inner yoke 21 extends vertically from the base 1, namely in the focus direction Y, through the central opening 10 of the lens holder A.

The base 1 is connected to the suspension wire holder 2 by two screws 22 extending through screw openings 23 in the suspension wire holder part 2. The base 1 is provided with weight reducing recesses 24, in a region under the lens 3, in order to reduce the weight of the actuator and with mobility clearances recesses 25, e.g. under the projections 9 for the soldering points 5, in order to assure the movements of the lens holder A.

The suspension wire holder 2 comprises damping recesses 26, at opposite sides in the tracking direction X. The damping recesses 26 are filled with a damping material, which fills the damping recesses 26 in order to damp the suspension wires 4 and which is not shown in the figures.

As an alternative for the balance opening 15 or as an additional feature, at least one of the suspension wires 4 at the opposite side of the lens 3 has a diameter larger than the diameter of the other suspension wires 4.

A pickup with an actuator according to this invention can be used in the so-called slide or sled design of optical media drives, where it is shiftably fitted to a frame structure of the drive, with appropriate linear driving means for realising the shift, such as linear motors or a motor driven threaded rod. Alternatively, the actuator according to this invention is also usable in the so-called swing arm design, where it is pivotably integrated at the end of such an arm having a pivoting axis parallel to the focus direction. In that way, the actuator is movable across the tracks T on the surface of the disk D along an arc which has its main extension in the tracking direction X.

According to the invention the board used for manufacturing the actuator, which is made from a core material of printed circuit board without a metal layer, is machined in a way that the board comprises at least one actuator blank B, e.g. numerous actuator blanks B, extending in a plane spanned by the tracking direction X and the information direction Z.

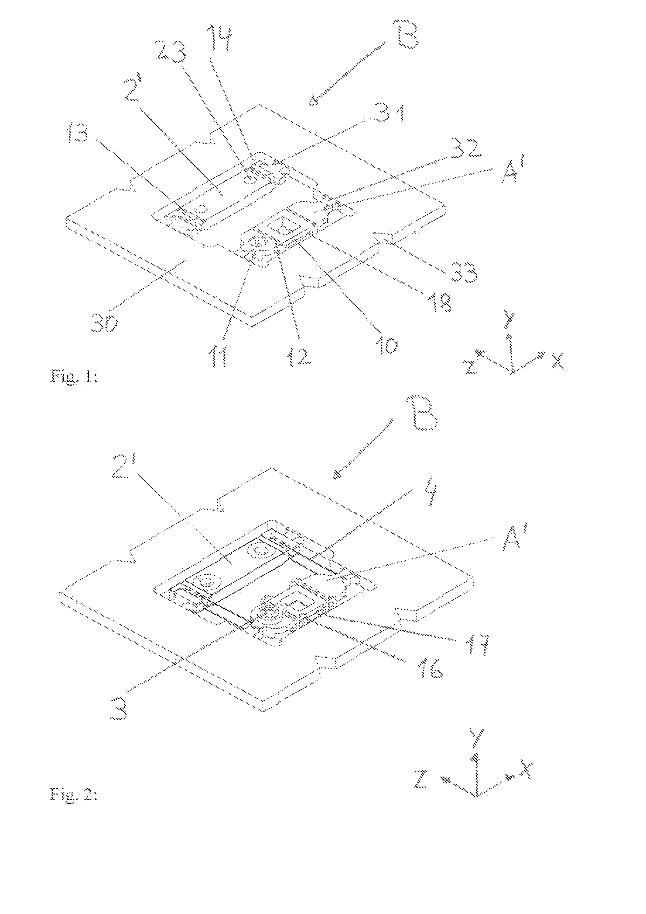

**Figures 1 and 2** show perspective views from above and below of one actuator blank B according to the invention. Each actuator blank B has a frame 30, a suspension wire holder part 2' and a lens holder part A', where the suspension wire holder part 2' and the lens holder part A' consist of two inner longish bars. The suspension wire holder part 2' and the lens holder part A' comprise catwalks 31, 32 at their ends, and are connected to the frame 30 by the catwalks 31, 32. They are arranged with a certain distance to one another in the information direction Z and extend parallel to one another in the tracking direction X. The distance nearly corresponds to the similar widths of the suspension wire holder part 2' and the lens holder part A'. This is shown in the figures. Each frame 30 is provided with notches 33 in line with the positions of suspension wires 4 for fixing the suspension wires 4 to be soldered to the suspension wire holder part 2' and to the lens holder part A', in their positions.

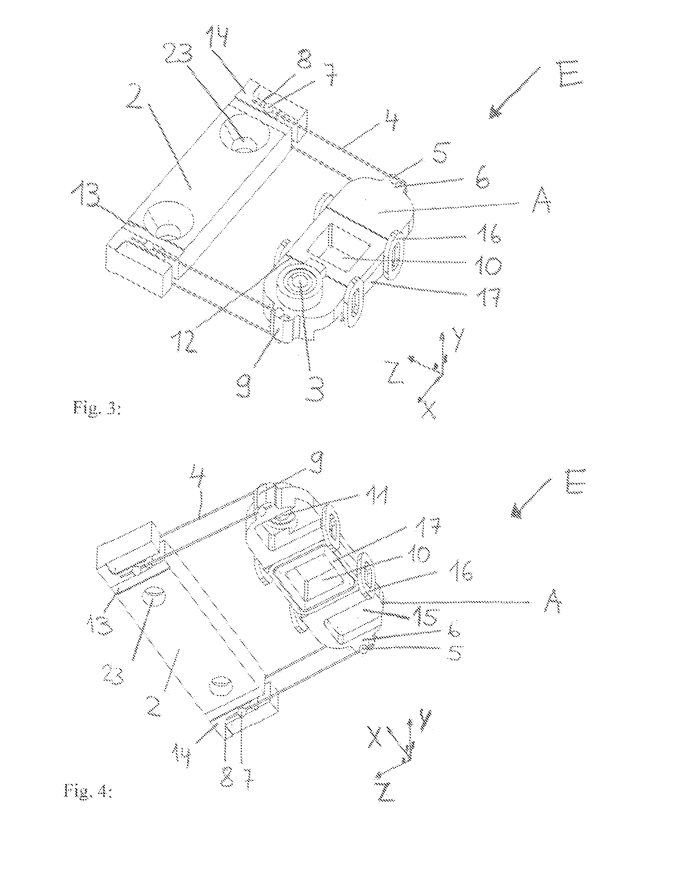

**Figures 3 and 4** show perspective views from above and below of an ensemble E of the first embodiment, namely the suspension wire holder 2 and the lens holder A connected by the suspension wires 4 and without the base 1, taken off the frame 30.

In a method for manufacturing the actuator according to the invention, the board made from a printed circuit board material and comprising contact areas, is machined with the steps:
a) removing material parts from at least one actuator blank B of the board to constitute the frame 30, the suspension wire holder part 2' and the lens holder part A',
b) providing the lens holder part A' with coils,
c) soldering the suspension wires 4 to the suspension wire holder part 2' and to the lens holder part A',
d) adding the lens 3 to the lens holder part A', and
f) taking off the suspension wire holder part 2' and the lens holder part A' connected by the suspension wires 4 as a whole from the frame 30.
Additionally, the base 1 is added.

In particular, the material of the board is a core material of a printed circuit board without metal layers, as mentioned above. In step a) material parts from each actuator blank B are removed in a way that the actuator blank B is constituted with the frame 30, the suspension wire holder part 2' and the lens holder part A', also as mentioned above. The suspension wire holder part 2' and the lens holder part A' are constituted as longish bars and are provided with the catwalks 31, 32, with the central opening 10, the lens opening 11, the first grooves 12, the second grooves 13, the projections 14, the opening 15, the coil opening 18 and the screw openings 23. The frame 30 is provided with the notches 33.

The board comprises predefined and processed contact areas on the suspension wire holder part 2' and on the lens holder part A'. In particular, the contact areas are constituted as the soldering pads 6 and 8, which are already added to the board before the suspension wire holder part 2' and the lens holder part A' are constituted.

In step b) the lens holder part A' is provided with the four tracking coils 16, two tracking coils 16 each being attached at the front side and at the rear side of the lens holder part A' in the information direction Z. In addition, in step b) the lens holder part A' is provided with the focus coil 17, which is attached in the coil opening 18. In step c) the positions of the suspension wires 4 are fixed by the notches 33 of the frame 30 and the suspension wires 4 are soldered on the soldering pads 8 of the suspension wire holder part 2' constituting the soldering points 7 and on the soldering pads 6 of the lens holder part A' constituting the soldering points 5. The unnecessary sections of the suspension wires 4 are cut off. In addition, the tracking coils 16 and the focus coil 17 are electrically connected to the suspension wires 4, e.g. by being connected to the soldering pads 6. In step d) the lens 3 is added, where the lens 3 is attached to the lens opening 11 of the lens holder part A'.

In the following step f), the suspension wire holder part 2' and the lens holder part A' connected by the suspension wires 4 are cut off and taken off as a whole from the frame 30. The cut off suspension wire holder 2 and the cut off lens holder A, which are connected by the suspension wires 4, constitute the ensemble E, as shown in the figures 3 and 4. The projections 9 are constituted as sections of the catwalks 32.

In another following step g), the base 1 is added to this ensemble E taken off from the frame 30. In particular, the base 1 is mounted to the suspension wire holder 2, where the two screws 22 extending through the screw openings 23 of the suspension wire holder 2 are fixed to the base 1.

As an alternative of the method, the steps machining the board comprise an additional step:
e) adding the base 1 to the suspension wire holder part 2' and the lens holder part A', both being connected to the frame 30, before step f).
In particular, the base 1 is mounted to the suspension wire holder part 2'.
As an alternative for providing the contact areas, the material of the board is a material of a printed circuit board with two metal layers covering the top side and the bottom side of the board for constituting the contact areas. In step a) the contact areas are restricted to the soldering pads 6 and 8 on the suspension wire holder part 2' and on the lens holder part A' by removing the metal around the soldering pads 6 and 8.

As a further alternative of the invention, the material of the board is a material of a printed circuit board with at least one metal layer inside. One or more metal layers inside enable an improvement of the mechanical stability.

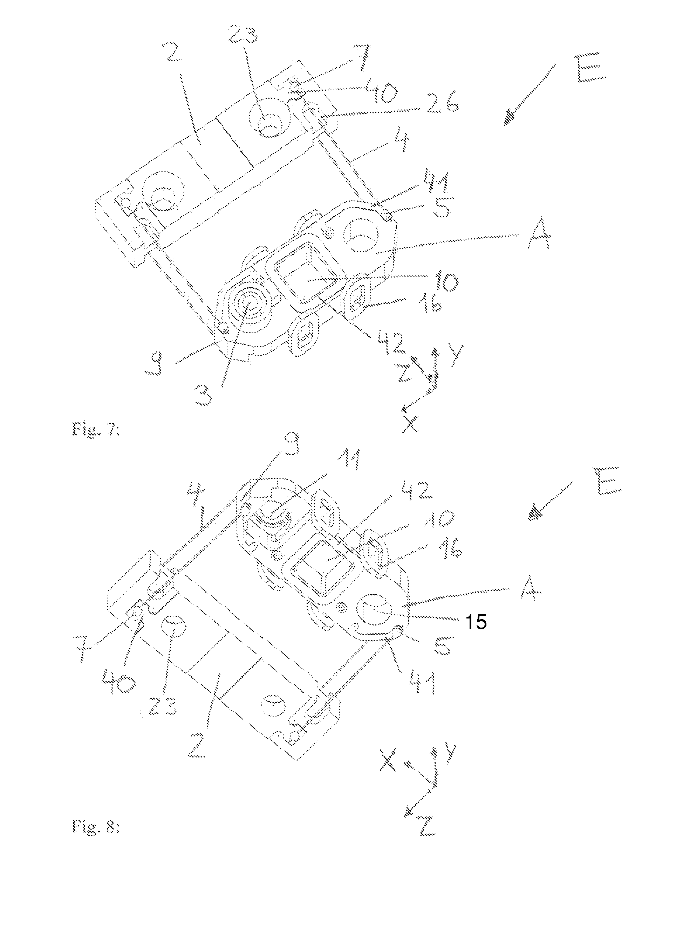

An ensemble E of an actuator of a second embodiment of the invention is shown in the **figures 7 and 8****.** The ensemble E and the actuator constituted by the ensemble E with the base 1 correspond to the first embodiment except for the following features:
The suspension wire holder 2 and the lens holder A are provided with soldering pads 40, 41, which are somewhat differently shaped than the soldering pads 6 and 8 of the first embodiment. The suspension wire holder 2 is not provided with the grooves 13 and the lens holder A is not provided with the grooves 12 and with the coil opening 18.

The material of the board is a material of a printed circuit board with several layers constituting a fine pattern focus coil 42 in the lens holder part A' and in the lens holder A respectively. In the figure 7 a first layer of the fine pattern coil 42 at the top of the lens holder A and in figure 8 a last layer of the fine pattern coil 42 at the bottom of the lens holder A is seen. In step b) the lens holder part A' is only provided with the four tracking coils 16.

As an alternative, the material of the board is a material of a printed circuit board with several layers of a printed focus coil in the lens holder part A' and in the lens holder A respectively.

## Claims

1. An actuator for accessing moving storage media (D) carrying substantially parallel information tracks (T), the actuator having a carrier with a base (1) and a suspension wire holder (2), a lens holder (A) with a lens (3), and suspension wires (4) connecting the suspension wire holder (2) and the lens holder (A), the lens holder (A) movable in a tracking direction (X) and in a focus direction (y), and the suspension wires (4) extending in an information direction (Z) orthogonal to the tracking direction (X) and the focus direction (Y), the actuator **characterised in that** the suspension wire holder (2) and the lens holder (A) are constituted by a suspension wire holder part (2') and an lens holder part (A') of one machined board made from a printed circuit board material.

2. An actuator according to claim 1, where the material of the board is a material of a printed circuit board with at least one metal layer inside.

3. An actuator according to claim 1, where the material of the board is a material of a printed circuit board with at least one layer constituting one printed focus coil or one fine pattern focus coil (42) on the lens holder part (A').

4. A board used for manufacturing an actuator according to one of the claims 1 to 3, the board made from a printed circuit board material and machined in a way that the board comprises at least one actuator blank (B), extending in a plane spanned by the tracking direction (X) and the information direction (Z), each actuator blank (B) having a frame (30), a suspension wire holder part (2') and an lens holder part (A'), where the suspension wire holder part (2') and the lens holder part (A') are machined out of two inner longish bars, connected to the frame (30) at their ends, and arranged with a certain distance to one another in the information direction (Z), and extending parallel to one another in the tracking direction (X).

5. A board according to claim 4, where each frame (30) is provided with notches (33) in line with positions of the suspension wires (4) for fixing the positions of the suspension wires (4) to be soldered to the suspension wire holder part (2') and to the lens holder part (A').

6. A board according to claim 4 or 5, where the material of the board is a material of a printed circuit board with at least one metal layer inside.

7. A board according to one of the claims 4 to 6, where the material of the board is a material of a printed circuit board with at least one layer constituting one printed focus coil or one fine pattern focus coil (42) on the lens holder part (A').

8. A method for manufacturing an actuator according to one of the claims 1 to 3, where a board made from a printed circuit board material and comprising contact areas, is machined with the steps:
a) removing material parts from at least one actuator blank (B) of the board to constitute a frame (30), a suspension wire holder part (2') and an lens holder part (A'),
b) providing the lens holder part (A') with coils,
c) soldering suspension wires (4) to the suspension wire holder part (2') and to the lens holder part (A'),
d) adding a lens (3) to the lens holder part (A'),
f) taking off the suspension wire holder part (2') and the lens holder part (A') connected by the suspension wires (4) as a whole from the frame (30), and
where a base (1) is added.

9. A method according to claim 8, where the steps additionally comprise:
g) adding the base (1) to an ensemble (E) of the suspension wire holder (2) and the lens holder (A) connected by the suspension wires (4), taken off from the frame (30), after step f).

10. A method according to claim 8, where the steps additionally comprise:
e) adding the base (1) to the suspension wire holder part (2') and the lens holder part (A'), both being connected to the frame (30), before step f).

11. A method according to one of the claims 8 to 10, where in step b) at least two tracking coils (16) are provided.

12. A method according to one of the claims 8 to 11, where in step b) at least one focus coil (17) is provided.

13. A method according to one of the claims 8 to 12, where in step c) the suspension wires (4) are fixed in their positions by notches (33) of the frame (30).

14. A method according to one of the claims 8 to 13, where the material of the board is a material of a printed circuit board with at least one metal layer inside.

15. A method according to one of the claims 8 to 14, where the material of the board is a material of a printed circuit board with at least one layer constituting one printed focus coil or one fine pattern focus coils (42) on the lens holder part (A').
